# FASCICULE DE BREVET EUROPEEN

(11) **EP 3 663 813 B1**
(45) Date de publication et mention de la délivrance du brevet: **01.04.2026**
(21) Numéro de dépôt: 18209753.5
(22) Date de dépôt: 03.12.2018
(51) Int. Cl.: G02B 5/02, G02B 27/01, G02B 7/00

(54) **DISPOSITIF DE GÉNÉRATION D'IMAGES ET AFFICHEUR TÊTE HAUTE ASSOCIÉ**
BILDERZEUGUNGSVORRICHTUNG UND ENTSPRECHENDES HEAD-UP-DISPLAY
DEVICE FOR THE GENERATION OF IMAGES AND ASSOCIATED HEAD-UP DISPLAY

(43) Date de publication de la demande: 10.06.2020
(73) Titulaire: Valeo Comfort and Driving Assistance, 94000 Créteil (FR)
(72) Inventeur: BISSON, Jean-François, 94046 Créteil CEDEX (FR); LE-GUYADER, Delphine, 94046 Créteil CEDEX (FR); LEON, Renan, 94046 Créteil CEDEX (FR); VIVET, Laurent, 94046 Créteil CEDEX (FR); BLANC, Eric, 94046 Créteil CEDEX (FR); LE TOUMELIN, Loic, 74321 Bietigheim-Bissingen (DE); DELPIERRE, Laurent, 94046 Créteil (FR); FUJAK, Samuel, 74321 Bietigheim-Bissingen (DE); GRANDCLERC, François, 94046 Créteil CEDEX (FR); BOTTA, Stéphane, 94046 Créteil CEDEX (FR); SAUZAY, Laurent, 94046 Créteil (FR); BEN-NACHOUANE, Ayoub, 94046 Créteil CEDEX (FR)
(74) Mandataire: Delplanque, Arnaud

(56) Documents cités:
- EP-A1- 3 264 173
- EP-A1- 3 385 782
- WO-A1-2017/174804
- WO-A2-99/06873
- JP-A- 2011 037 642
- US-A1- 2016 299 342

## Description

### DOMAINE TECHNIQUE AUQUEL SE RAPPORTE L'INVENTION

La présente invention concerne de manière générale le domaine des systèmes d'affichage pouvant équiper les véhicules.

Elle concerne plus particulièrement un dispositif de génération d'images et un afficheur tête haute associé.

### ARRIERE-PLAN TECHNOLOGIQUE

Le principe des afficheurs tête haute pour véhicule est de projeter des images, notamment utiles à la conduite, directement dans le champ de vision d'un conducteur.

Pour cela, les afficheurs tête haute comprennent en général un dispositif de génération d'images adapté à générer un faisceau lumineux et un dispositif de projection de ce faisceau lumineux en direction d'une lame partiellement transparente placée dans le champ de vision du conducteur.

La plupart des dispositifs de génération d'images utilisés aujourd'hui comprennent au moins une source de lumière produisant un faisceau lumineux amont, une matrice d'éléments à transmittance variable éclairée par le faisceau lumineux amont et produisant un faisceau lumineux aval représentant une image, et un élément de diffusion de la lumière interposé entre la source de lumière et la matrice.

L'élément de diffusion permet d'augmenter l'étalement angulaire du faisceau lumineux amont et par là même celui du faisceau lumineux aval. L'afficheur tête haute est ainsi moins directif et l'image projetée peut donc être vue par le conducteur depuis un ensemble de positions élargi.

On sait par ailleurs que la nécessité d'avoir une image projetée visible même quand la luminosité ambiante est élevée conduit à générer un faisceau lumineux amont très puissant ; les technologies des matrices d'éléments à transmittance variable ayant une transmittance relativement faible, cela conduit à une augmentation importante de la température interne au passage du flux lumineux amont.

D'autre part, la lumière provenant du soleil peut, dans certaines positions spécifiques du soleil, être amplifiée par les jeux de miroirs et se focaliser sur la matrice d'éléments conduisant, là encore, à une augmentation importante de la température interne de la matrice d'éléments à transmittance variable.

Le document US 2016/299342 A1 divulgue un dispositif de l'art antérieur.

### OBJET DE L'INVENTION

Afin de remédier à l'inconvénient précité de l'état de la technique, la présente invention propose un dispositif de génération selon la revendication 1.

L'élément de diffusion possède ainsi une bonne conductivité thermique et peut ainsi contribuer à évacuer la chaleur produite par l'éclairement de la matrice par la source de lumière.

D'autres caractéristiques non limitatives et avantageuses du dispositif de génération d'images conforme à l'invention, prises individuellement ou selon toutes les combinaisons techniquement possibles, sont les suivantes :
- l'élément de diffusion est disposé au contact d'un radiateur thermique ;
- l'élément de diffusion est collé sur le radiateur thermique ;
- le radiateur thermique comprend une partie plane plaquée contre l'élément de diffusion (ce radiateur thermique pouvant éventuellement former une partie du boîtier de l'afficheur tête haute) ;
- l'élément de diffusion a une conductivité thermique supérieure à 5 W.m⁻¹.K⁻¹ (voire supérieure à 15 W.m⁻¹.K⁻¹) ;
- la céramique translucide est un oxyde de magnésium ou d'aluminium, par exemple de l'oxyde de magnésium (MgO), un spinelle (MgAl₂O₄) (la céramique translucide pourrait être un saphir, ou plus généralement des oxydes plus ou moins complexes tels que l'oxynitrure d'aluminium (AlON), des silicates ou d'yttrium);
- l'élément de diffusion de la lumière a une forme de plaque ;
- le dispositif de génération d'images comprend un réflecteur s'étendant entre la source de lumière et l'élément de diffusion ;
- les éléments à transmittance variable sont des cellules à cristaux liquides.

L'invention propose également un afficheur tête haute comprenant un dispositif de génération d'images tel que défini ci-dessus et un dispositif de projection adapté à renvoyer le faisceau lumineux aval en direction d'une lame partiellement transparente.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente les éléments principaux d'un afficheur tête haute destiné à un véhicule ;
- la figure 2 est une vue en coupe d'un exemple de dispositif de génération d'image conforme à l'invention ; et
- la figure 3 est une vue en perspective du dispositif de génération d'image de la figure 2.

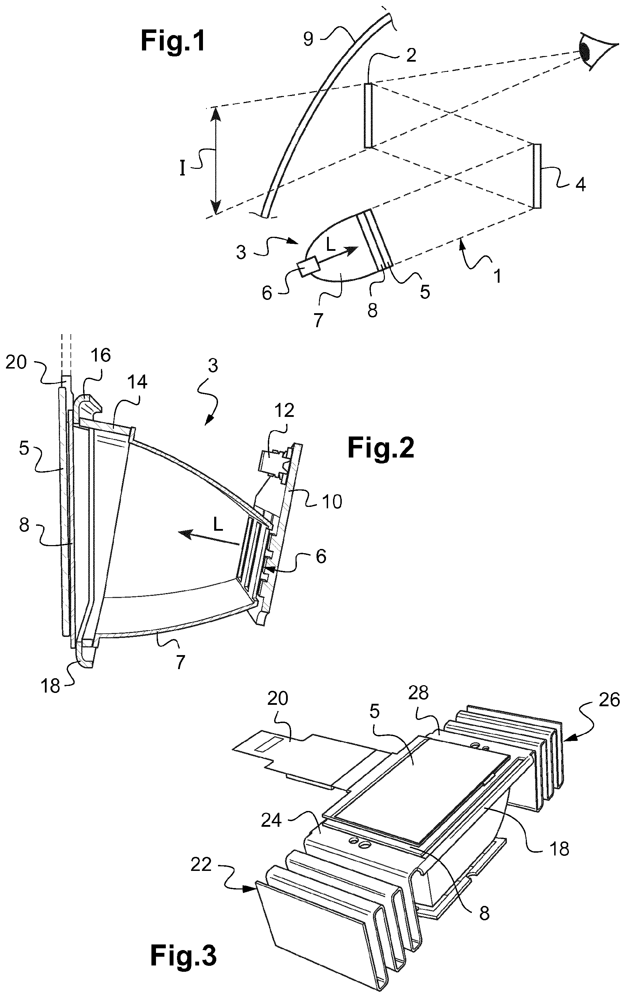

Sur la figure 1, on a schématiquement représenté les éléments principaux d'un afficheur 1 tête haute destiné à équiper un véhicule, par exemple un véhicule automobile.

Un tel afficheur 1 est adapté à créer une image virtuelle I dans le champ de vision d'un conducteur du véhicule, de sorte que le conducteur puisse voir cette image virtuelle I et les informations éventuelles qu'elle contient sans avoir à détourner le regard.

À cet effet, l'afficheur 1 comprend une lame partiellement transparente 2 placée dans le champ de vision du conducteur, un dispositif de génération d'images 3 adapté à générer un faisceau lumineux (dit *"aval"* dans la suite) et un dispositif de projection 4 adapté à renvoyer, en direction de ladite lame partiellement transparente 2, le faisceau lumineux généré par le dispositif de génération d'images 3.

Plus précisément, la lame partiellement transparente 2 est ici un combineur 2, c'est-à-dire une lame partiellement transparente dédiée à l'afficheur tête haute 1.

Un tel combineur 2 est ici placé entre le pare-brise 9 du véhicule et les yeux du conducteur.

En variante, la lame partiellement transparente pourrait être confondue avec le pare-brise du véhicule. Autrement dit, dans cette variante, c'est le pare-brise du véhicule qui a la fonction de lame partiellement transparente pour l'afficheur tête haute.

Par ailleurs, ici, le dispositif de projection comprend un miroir de repliement 4 agencé de manière à réfléchir le faisceau lumineux (aval) généré par le dispositif de génération 3 d'images en direction de la lame partiellement transparente 2. Ici, ledit miroir de repliement 4 est un miroir plan. En variante, le miroir de repliement pourrait être courbe, par exemple avec une forme optimisée pour produire une image virtuelle rectangulaire.

Selon d'autres modes de réalisation, le dispositif de projection d'images pourrait comprendre une pluralité de miroirs et/ou d'autres éléments optiques tels qu'une lentille par exemple.

Comme bien visible sur la figure 2, le dispositif de génération 3 d'images comprend quant à lui au moins une source de lumière 6 produisant un faisceau lumineux amont, une matrice 5 d'éléments à transmittance variable éclairée par le faisceau lumineux amont et un réflecteur 7 interposé entre la source de lumière 6 et la matrice 5. (On a schématiquement représenté par la flèche L sur les figures le sens de propagation de la lumière de la source de lumière 6 vers la matrice 5, au niveau du faisceau lumineux amont).

La matrice 5 produit ainsi en sortie un faisceau lumineux aval représentant une image à projeter dans le champ de vision du conducteur au moyen du dispositif de projection 4.

La source de lumière 6 est ici une diode électroluminescente (ou LED pour *"Light Emitting Diode*"). Plusieurs telles sources de lumières 6 peuvent être utilisées en pratique.

La ou les source(s) de lumière 6 sont par exemple portées par un circuit imprimé 10, monté par exemple sur le réflecteur 7 (à l'opposé de la matrice 5). Le circuit imprimé 10 peut éventuellement porter en outre un circuit d'alimentation (non représenté) de la source de lumière 6 et/ou un connecteur 12 pour connexion à une source d'énergie électrique.

La matrice 5 est ici un écran à cristaux liquides (ou LCD pour *"Liquid Crystal Display"*), par exemple à transistors en couche mince (ou TFT pour *"Thin-Film Transistor*"). Les éléments à transmittance variable de la matrice 5 sont dans ce cas des cellules à cristaux liquides.

Le dispositif de génération d'images 3 comprend en outre un élément de diffusion de la lumière 8 interposé entre la source de lumière 6 et la matrice 5. L'élément de diffusion de la lumière 8 est ainsi traversé par le faisceau lumineux généré par la source de lumière 6.

L'élément de diffusion de la lumière 8 a ici la forme d'une plaque (avec deux faces principales parallèles, de dimensions bien supérieures à l'épaisseur de la plaque).

L'élément de diffusion de la lumière 8 permet d'obtenir, à son aval sur le trajet de la lumière L, un faisceau lumineux ayant une étendue angulaire supérieure à 20°, typiquement comprise entre 10° et 45°. La diffusion réalisée peut être circulaire, elliptique ou d'angle quelconque.

L'élément de diffusion de la lumière 8 est réalisé en céramique translucide. L'élément de diffusion de la lumière 8 a ainsi une bonne conductivité thermique, typiquement supérieure à 15 W.m⁻¹.K⁻¹ et comprise par exemple entre 5 W.m⁻¹.K⁻¹ et 50 W.m⁻¹.K⁻¹.

On désigne par le terme céramique tout article ayant un corps vitrifié ou non, de structure cristalline ou partiellement cristalline, monocristalline ou polycristalline, ou de verre, dont le corps est formé de substances essentiellement inorganiques et non métalliques, et qui est formé par une masse en fusion qui se solidifie en se refroidissant, ou qui est formé et porté à maturité, en même temps ou ultérieurement, par l'action de la chaleur ou qui est formé par un processus de croissance lente à partir d'un bain sursaturé.

L'élément de diffusion de la lumière 8 est par exemple réalisé en oxyde de magnésium (MgO) fritté. Un exemple de procédé d'obtention d'un tel élément de diffusion de la lumière 8 est décrit plus bas. En variante, l'élément de diffusion de la lumière 8 pourrait être réalisé en oxyde d'aluminium (par exemple un spinelle de formule MgAl₂O₄), en saphir, en oxynitrure d'aluminium (AlON), de silicate ou d'yttrium.

Selon l'invention, comme bien visible sur la figure 2, l'élément de diffusion de la lumière 8 est disposé au contact de la matrice 5. Précisément, l'élément de diffusion de la lumière 8 étant ici réalisé sous forme d'une plaque, l'élément de diffusion de la lumière 8 est plaqué contre la matrice 5.

Selon l'invention, l'élément de diffusion de la lumière 8 et la matrice 5 sont collés l'un à l'autre au moyen d'une colle optique diffusante.

Par ailleurs, comme bien visible sur la figure 2, une entretoise 14 peut être interposée entre le réflecteur 7 et l'élément de diffusion de la lumière 8. L'entretoise 14 a une étendue axiale (selon la direction de propagation de la lumière) variable selon la région considérée (par exemple en haut et en bas en figure 2) de sorte que l'élément de diffusion de la lumière 8 et la matrice 5 sont inclinés par rapport à la direction principale du faisceau lumineux amont généré par la source de lumière 6.

En variante, l'entretoise 14 peut être intégrée au réflecteur 7.

Comme bien visible sur la figure 3, le dispositif de génération d'images 3 comprend ici en outre une nappe 20 et/ou au moins un radiateur.

La nappe 20 réalise la connexion de la matrice 5 à une unité de commande (non représentée) conçue pour commander chacune des cellules de la matrice 5 de manière à générer un faisceau aval correspondant à l'image à afficher.

On prévoit ici d'utiliser un radiateur comprenant deux parties planes 24, 28 disposées chacune au contact de l'élément de diffusion de la lumière 8 (en étant ici plaquée contre l'élément de diffusion de la lumière 8). L'élément de diffusion de la lumière 8 est par exemple collé sur le radiateur, ici précisément sur une partie des parties planes 24, 28. Le radiateur comprend également deux bras reliant les deux parties planes 24, 28 et portant chacun un rebord 16, 18 (visible en figure 2). Chaque rebord 16, 18 participe à l'évacuation de la chaleur et pourrait s'étendre plus loin vers l'extérieur du dispositif de génération d'images 3.

Comme visible sur la figure 2, les bras reliant les deux parties planes 24, 28 sont au contact de l'élément de diffusion de la lumière (en étant ici respectivement pincés entre l'élément de diffusion de la lumière 8 et l'entretoise 14).

Le radiateur comprend en outre ici deux parties d'extrémité 22, 26 qui s'étendent chacune à partir d'une partie plane 24, 28. En variante, on pourrait prévoir, à chaque extrémité du radiateur, une plaque qui s'étend à partir de la partie plane 24, 28 correspondant et qui porte des ailettes de refroidissement.

Selon une autre possibilité de réalisation (non représentée) un tel radiateur peut être formé par le boîtier métallique de l'afficheur.

Lors du fonctionnement du dispositif de génération d'images 3, la matrice 5 a tendance à s'échauffer (du fait de l'absorption en son sein d'une grande partie de la lumière produite par la source de lumière 6, en particulier lorsque l'image à projeter est en grande partie noire ou sombre).

Grâce à la bonne conductivité thermique de l'élément de diffusion de la lumière 8, la chaleur présente au niveau de la matrice 5 peut s'évacuer via l'élément de diffusion de la lumière 8, en direction des radiateurs 22, 26 et des barres métalliques 16, 18.

En particulier, du fait que l'élément de diffusion de la lumière 8 et la matrice 5 sont plaquées l'une contre l'autre, la chaleur présente dans la matrice 5 est évacuée quelle que soit la région de la matrice 5 concernée.

Les étapes principales d'un procédé d'obtention de l'élément de diffusion de la lumière 8 sont les suivantes :
- granulation d'une poudre d'oxyde de magnésium ;
- formage par pressage isostatique à froid ;
- frittage, incluant par exemple un pré-frittage à l'air libre et un pressage isostatique à haute température ;
- polissage des deux faces principales (ce polissage pouvant être circulaire, elliptique ou linéaire, identique sur les deux faces ou différent selon les faces tant sur le type circulaire, elliptique ou linéaire que sur la qualité ou l'intensité de polissage).

Le frittage permet d'obtenir une céramique transparente dans la plus grande partie du volume traité ; des zones chaotiques (non transparentes) sont toutefois présentes en surface à l'issue du frittage.

L'étape de polissage vise à de réduire ces zones chaotiques.

On prévoit ici que, pour l'une des deux faces principales de l'élément de diffusion de la lumière 8 au moins, le polissage soit interrompu avant élimination des zones chaotiques de manière à laisser subsister une couche provoquant une diffusion de la lumière sur la face principale concernée.

On obtient ainsi un élément de diffusion de la lumière 8 réalisé en céramique translucide et dont le cône de diffusion dépend de la technique de polissage utilisée (notamment circulaire, elliptique ou linéaire comme déjà indiqué).

## Revendications

1. Dispositif de génération d'images (3) comprenant :
- au moins une source de lumière (6) produisant un faisceau lumineux amont (L) ;
- une matrice (5) d'éléments à transmittance variable éclairée par le faisceau lumineux amont (L) et produisant un faisceau lumineux aval représentant une image ; et
- un élément de diffusion de la lumière (8) interposé entre la source de lumière (6) et la matrice (5),
dans lequel l'élément de diffusion (8) est disposé au contact de la matrice (5),
**caractérisé en ce que** l'élément de diffusion (8) est réalisé en céramique translucide, et
dans lequel l'élément de diffusion (8) est collé sur la matrice (5) au moyen d'une colle optique diffusante.

2. Dispositif de génération d'images selon la revendication 1, dans lequel l'élément de diffusion (8) est disposé au contact d'un radiateur thermique (22 ; 26).

3. Dispositif de génération d'images selon la revendication 2, dans lequel le radiateur thermique (22 ; 26) comprend une partie plane (24 ; 28) plaquée contre l'élément de diffusion (8).

4. Dispositif de génération d'images selon l'une des revendications 1 à 3, dans lequel l'élément de diffusion (8) a une conductivité thermique supérieure à 5 W.m⁻¹.K⁻¹.

5. Dispositif de génération d'images selon l'une des revendications 1 à 4, dans lequel la céramique translucide est un oxyde de magnésium ou d'aluminium.

6. Dispositif de génération d'images selon l'une des revendications 1 à 5, dans lequel l'élément de diffusion de la lumière (8) a une forme de plaque.

7. Dispositif de génération d'images selon l'une des revendications 1 à 6, comprenant un réflecteur (7) s'étendant entre la source de lumière (6) et l'élément de diffusion (8).

8. Dispositif de génération d'images selon l'une des revendications 1 à 7, dans lequel les éléments à transmittance variable sont des cellules à cristaux liquides.

9. Afficheur tête haute (1) comprenant un dispositif de génération d'images (3) selon l'une des revendications 1 à 8, et un dispositif de projection (4) adapté à renvoyer le faisceau lumineux aval en direction d'une lame partiellement transparente (2).

## Patentansprüche

1. Bildgebungsvorrichtung (3) mit:
- mindestens eine Lichtquelle (6), die einen stromaufwärtigen Lichtstrahl (L) erzeugt;
- eine Matrix (5) aus Elementen mit variabler Durchlässigkeit, die von dem stromaufwärts gerichteten Lichtstrahl (L) beleuchtet wird und einen stromabwärts gerichteten Lichtstrahl erzeugt, der ein Bild darstellt; und
- ein Lichtstreuelement (8), das zwischen der Lichtquelle (6) und der Matrix (5) angeordnet ist, wobei das Streuelement (8) in Kontakt mit der Matrix (5) angeordnet ist,
**dadurch gekennzeichnet, dass** das Streuelement (8) aus lichtdurchlässiger Keramik besteht und
wobei das Streuelement (8) mittels eines streuenden optischen Klebstoffs auf die Matrix (5) geklebt ist.

2. Bildgebungsvorrichtung nach Anspruch 1, wobei das Streuelement (8) in Kontakt mit einem Wärmesenke (22; 26) angeordnet ist.

3. Bilderzeugungsvorrichtung nach Anspruch 2, wobei der Wärmestrahler (22; 26) einen flachen Teil (24; 28) umfasst, der gegen das Streuelement (8) gedrückt wird.

4. Bildgebungsvorrichtung nach einem der Ansprüche 1 bis 3, wobei das Streuelement (8) eine Wärmeleitfähigkeit von mehr als 5 W.m⁻¹ K⁻¹ aufweist.

5. Bilderzeugungsvorrichtung nach einem der Ansprüche 1 bis 4, wobei die lichtdurchlässige Keramik ein Magnesium- oder Aluminiumoxid ist.

6. Bilderzeugungsvorrichtung nach einem der Ansprüche 1 bis 5, wobei das Lichtstreuelement (8) eine Plattenform aufweist.

7. Bildgebungsvorrichtung nach einem der Ansprüche 1 bis 6, wobei die Vorrichtung ( ) einen Reflektor (7) umfasst, der sich zwischen der Lichtquelle (6) und dem Streuelement (8) erstreckt.

8. Bilderzeugungsvorrichtung nach einem der Ansprüche 1 bis 7, wobei die Elemente mit variabler Durchlässigkeit Flüssigkristallzellen sind.

9. Head-up-Display (1) mit einer Bilderzeugungsvorrichtung (3) gemäß einem der Ansprüche 1 bis 8 und einer Projektionsvorrichtung (4), die dazu ausgelegt ist, den stromabwärts gerichteten Lichtstrahl in Richtung einer teilweise transparenten Platte (2) zurückzuwerfen.

## Claims

1. Image generating device (3) comprising:
- at least one light source (6) producing an upstream light beam (L);
- a matrix (5) of variable transmittance elements illuminated by the upstream light beam (L) and producing a downstream light beam representing an image; and
- a light diffusion element (8) interposed between the light source (6) and the array (5), wherein the diffusion element (8) is arranged in contact with the array (5),
**characterised in that** the diffusion element (8) is made of translucent ceramic, and
wherein the diffusing element (8) is bonded to the matrix (5) by means of a diffusing optical adhesive.

2. Image generation device according to claim 1, wherein the diffusion element (8) is arranged in contact with a heat sink (22; 26).

3. Image generating device according to claim 2, wherein the heat sink (22; 26) comprises a flat portion (24; 28) pressed against the diffusion element (8).

4. An image generating device according to any one of claims 1 to 3, wherein the diffusion element (8) has a thermal conductivity greater than 5 W.m⁻¹ .K⁻¹.

5. An image generating device according to any one of claims 1 to 4, wherein the translucent ceramic is magnesium oxide or aluminium oxide.

6. An image generating device according to any one of claims 1 to 5, wherein the light diffusing element (8) has a plate shape.

7. An image generating device according to any one of claims 1 to 6, wherein the device ( ) comprises a reflector (7) extending between the light source (6) and the diffusing element (8).

8. An image generating device according to any one of claims 1 to 7, wherein the variable transmittance elements are liquid crystal cells.

9. Head-up display (1) comprising an image generation device (3) according to one of claims 1 to 8, and a projection device (4) adapted to reflect the downstream light beam towards a partially transparent blade (2).
